# EUROPÄISCHE PATENTSCHRIFT

(11) **EP 1 888 936 B1**
(45) Veröffentlichungstag und Bekanntmachung des Hinweises auf die Patenterteilung: **25.02.2009**
(21) Anmeldenummer: 06753738.1
(22) Anmeldetag: 19.05.2006
(51) Int. Cl.: F16D 55/2255

(54) **PNEUMATISCH UND/ODER ELEKTROMECHANISCH BETÄTIGBARE SCHEIBENBREMSE FÜR EIN NUTZFAHRZEUG**
PNEUMATICALLY AND/OR ELECTROMECHANICALLY ACTUATED DISK BRAKE FOR A UTILITY VEHICLE
FREIN A DISQUE A ACTIONNEMENT PNEUMATIQUE ET/OU ELECTROMECANIQUE POUR VEHICULE UTILITAIRE

(30) Priorität: 25.05.2005 DE 102005024119
(43) Veröffentlichungstag der Anmeldung: 20.02.2008
(73) Patentinhaber: KNORR-BREMSE SYSTEME FÜR NUTZFAHRZEUGE GMBH, 80809 München (DE)
(72) Erfinder: BIRKENEDER, Franz-Josef, 94501 Aldersbach (DE)
(74) Vertreter: Mattusch, Gundula
(86) Internationale Anmeldenummer: PCT/EP2006/004759
(87) Internationale Veröffentlichungsnummer: WO 2006/125567

(56) Entgegenhaltungen:
- US-A- 3 534 835
- US-A- 5 547 048
- US-A1- 2004 026 181

## Beschreibung

Die vorliegende Erfindung betrifft eine pneumatisch und/oder elektromechanisch betätigbare Scheibenbremse für ein Nutzfahrzeug gemäß dem Oberbegriff des Anspruchs 1. So eine Bremse ist z.B. aus US-A-2004/0026181 bekannt.

Derartige, als Festsattelbremse bekannte Scheibenbremsen nutzen das Reaktionskraftprinzip derart, dass durch elastische Verformung des Bremssattels nach einem Anpressen des mit der Zuspanneinrichtung an die Bremsscheibe angedrückten Bremsbelages der gegenüber liegende Bremsbelag an die Bremsscheibe gepresst wird.

Dabei kann der Bremssattel selbst elastisch verformbar sein und/oder ein Anschlussflansch, über den der Bremssattel mit dem Achsteil fest verbunden ist.

Die Verformung des Bremssattels erfolgt so weit, dass ein Lüftspiel zwischen der Bremsscheibe und dem reaktionsseitigen Bremsbelag überwunden wird.

Zum Ausgleich von Bremsbelag- und/oder Bremsscheibenverschleiß ist jedem Bremsbelag eine Nachstelleinrichtung zugeordnet, durch die gewährleistet ist, dass das Lüftspiel zwischen dem jeweiligen Bremsbelag und der Bremsscheibe gleich bleibt.

Nachteilig hierbei ist jedoch, dass es zu einem ungleichmäßigen Verschleiß der beiden Bremsbeläge kommt, was nachteilig ist, da z.B. die Standzeit nicht dem gewünschten Umfang entspricht. Darüber hinaus wirken Axialkräfte auf die Radlagerung, was ebenfalls eine Einschränkung der Standzeit zur Folge hat, mit den sich daraus ergebenden Folgekosten hinsichtlich notwendiger Reparaturen.

Der vorliegenden Erfindung liegt die Aufgabe zugrunde, eine Scheibenbremse der gattungsgemäßen Art so weiter zu entwickeln, dass ihre Betriebssicherheit verbessert und die Standzeit erhöht werden.

Diese Aufgabe wird durch eine Scheibenbremse mit den Merkmalen des Anspruchs 1 gelöst.

Vorteilhafte Ausgestaltungen sind in den Unteransprüchen angegeben.

Danach ist im Bereich des Schwenkhebels ein Stützteil vorgesehen, das derart angeordnet und ausgelegt ist, dass es bei einer Zuspannbewegung des Schwenkhebels nach einem vorbestimmten Hub des Bremskolbens zwischen dem Andruckbereich des Bremsbelages am Schwenkhebel und dessen Abstützung am Bremssattel ein Widerlager für den Schwenkhebel bildet.

Vorzugsweise ist das Stützteil als ein fest mit dem Schwenkhebel verbundener Anschlagstößel ausgebildet, der sich im Funktionsfall an einem Achsteil oder an einem fest mit des Achse verbundenen Teil - z.B. an einem inneren Ansatz des Bremssattels selbst - abstützt.

Während nach dem Stand der Technik zur Erzeugung der Reaktionskraft der aktionsseitige Bremsbelag an die feststehende Bremsscheibe angepresst werden musste, wird durch die Erfindung erreicht, dass die elastische Verformung des Bremssattels mit einem Heranziehen des reaktionsseitigen Bremsbelages in Richtung der Bremsscheibe bereits dann erfolgt, wenn der aktionsseitige Bremsbelag noch nicht im Eingriff mit der Bremsscheibe ist.

Durch den dadurch bedingten gleichzeitigeren Einsatz der beiden Bremsbeläge bei einem weiteren Zuspannen, werden diese gleichmäßiger beansprucht. Der Effekt des ungleichmäßigen Verschleißes wird somit verringert, so dass die Standzeit der Bremsbeläge erhöht wird.

Nach einer vorteilhaften Weiterbildung der Erfindung ist vorgesehen, dass das Stützteil als Anschlagstößel ausgebildet ist, der sich in Zuspannrichtung erstreckt und an dem quer dazu verlaufenden achsfesten Teil zur Anlage kommt.

Dabei ist die Längendimensionierung und die Platzierung am Schwenkhebel so gewählt, dass der Anschlagstößel nach der Hälfte des Zuspannweges am achsfesten Teil anliegt.

Neben der Anbringung des Anschlagstößels unmittelbar am Schwenkhebel besteht auch die Möglichkeit den Anschlagstößel fest mit dem starren Achsteil zu verbinden, so dass sich der Schwenkhebel bei der Zuspannbewegung an diesem Anschlagstößel abstützt.

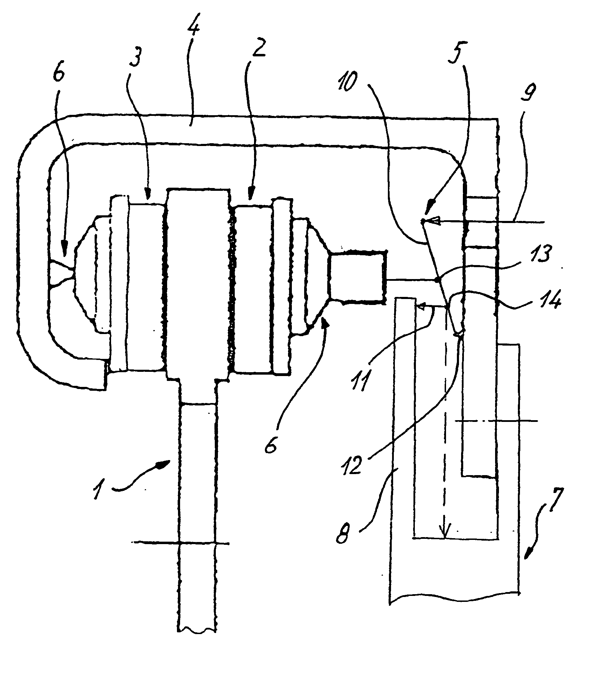

Ein Ausführungsbeispiel der Erfindung wird nachfolgend anhand der beigefügten Zeichnung beschrieben.

Die einzige Figur zeigt einen Teilausschnitt einer erfindungsgemäßen Scheibenbremse in einer schematischen Seitenansicht.

In der Figur ist eine pneumatisch und/oder elektromechanische betätigbare Scheibenbremse für ein Nutzfahrzeug dargestellt, die einen eine vorzugsweise axial feststehende Bremsscheibe 1 übergreifenden Bremssattel 4 aufweist, der als Festsattel ausgebildet ist, der in sich elastisch verformbar ist oder der an einem elastisch verformbaren Achsteil angeordnet ist und an dem Achsteil 7 befestigt ist. Die Bremsscheibe kann auch z.B. im Bereich ihrer Reibscheibe begrenzt axial beweglich oder verformbar sein, so dass in diesem Fall beim Zuspannen teilweise die Scheibe und teilweise der Sattel verformt werden.

Beidseitig der Bremsscheibe 1 sind Bremsbeläge 2, 3 angeordnet, die jeweils mit einer Nachstelleinrichtung 6 versehen sind, mit der ein Verschleißhub der Bremsbeläge 2, 3 nachstellbar ist.

Dem im Ausführungsbeispiel rechtsseitig angeordneten Bremsbelag 2 ist eine Zuspanneinrichtung 5 zugeordnet, über die der Bremsbelag 2 als aktionsseitiger Bremsbelag gegen die Bremsscheibe 1 pressbar ist.

Die Zuspanneinrichtung 5 weist einen Dreh- bzw. Schwenkhebel 10 auf, der sich einerseits am Bremssattel 4 abstützt und an der andererseits direkt oder über weitere Zwischenelemente wie eine Walze, ggf. eine Brücke oder dgl. auf einen Bremskolben 9 einwirkt. Bei einer Betätigung der Zuspanneinrichtung 5 wird der Bremskolben 9 in Richtung der Bremsscheibe 1 bewegt, wobei der in einem Andruckbereich 13 mittelbar anliegende Bremsbelag 6 in Richtung der Bremsscheibe 1 bewegt wird.

Der Schwenkhebel 10 ist im Bereich der Abstützung 12 am Bremssattel 4 in an sich bekannter Weise als Exzenter ausgebildet, wie dies beispielsweise in der DE 42 30 005 A1 dargestellt ist.

Erfindungsgemäß ist im Bereich des Schwenkhebels 10 ein Stützteil 11 vorgesehen, das bei einer Zuspannbewegung des Schwenkhebels 10 nach einem vorbestimmten Hub des Bremskolbens 9 zwischen dem Andruckbereich 13 des Bremsbelages 2 am Schwenkhebel 10 und dessen Abstützung 12 am Bremssattel 4 ein Widerlager bildet.

Im gezeigten Beispiel besteht das Stützteil 11 aus einem Anschlagstößel, der über einen Anschluss 14 mit dem Schwenkhebel 10 fest verbunden ist.

Bei Betätigung der Zuspanneinrichtung 5 und einem Verschwenken des Schwenkhebels 10 wird zunächst der aktionsseitige Bremsbelag 2 in Richtung der Bremsscheibe 1 gedrückt, bis das Stützteil 11 an einem Achsflansch 8 des Achsteile 7 zur Anlage kommt. Nach einem weiteren Zuspannen wird der elastische Bremssattel 4 durch die Abstützung des Stützteiles 11 entgegen der Zuspannrichtung bewegt unter Mitnahme des reaktionsseitigen Bremsbelages 3, wobei gleichzeitig der aktionsseitige Bremsbelag 2 weiter in Richtung der Bremsscheibe 1 gedrückt wird, bis beide Bremsbeläge 2, 3 an der Bremsscheibe 1 anliegen. Durch die Erfindung wird erreicht, dass der reaktionsseitige Bremsbelag 3 nicht erst dann in Richtung der Bremsscheibe 1 geführt wird, wenn der aktionsseitige Bremsbelag 2 bereits an der Bremsscheibe 1 anliegt, sondern vorher, so der Effekt des ungleichmäßigen Verschleißes der Bremsbeläge 2, 3 verringert wird.

Dabei bestimmt die Länge des Stützteiles 11 und deren Positionierung zwischen dem Andruckbereich 13 und der Abstützung 12 die Länge des Zuspannhubes, nach welchem der reaktionsseitige Bremsbelag 3 in Richtung der Bremsscheibe 1 gezogen wird.

Anstelle der Anlage des Stützteiles 11 an dem parallel zur Bremsscheibe 1 verlaufenden Achsflansch 8 kann die Betätigungsrichtung des Stützteiles 11 auch 90° versetzt entsprechend der gestrichelten Linie ausgerichtet sein.

### Bezugszeichenliste

- 1: Bremsscheibe
- 2: Bremsbelag
- 3: Bremsbelag
- 4: Bremssattel
- 5: Zuspanneinrichtung
- 6: Nachstelleinrichtung
- 7: Achsteil
- 8: Achsflansch
- 9: Bremskolben
- 10: Schwenkhebel
- 11: Stützteil
- 12: Abstützung
- 13: Andruckbereich
- 14: Anschluss

## Patentansprüche

1. Pneumatisch und/oder elektromechanisch betätigbare Scheibenbremse für ein Nutzfahrzeug, mit
a) einer Zuspanneinrichtung (5) zum Zuspannen der Bremse,
b) einem eine axial feststehende Bremsscheibe (1) übergreifenden Bremssattel (4), der an einem Achsteil (7) befestigbar ist und der als Festsattel ausgelegt ist, der bei Zuspannbewegungen über elastische Verformung den reaktionsseitigen Bremsbelag an die Bremsscheibe bewegt,
c) wobei die Zuspanneinrichtung (5) einen Schwenkhebel (10) aufweist, der sich einerseits am Bremssattel (4) abstützt und an der andererseits an einem Bremskolben (9) angreift, über den der zuspannseitige Bremsbelag (2) an die Bremsscheibe (1) andrückbar ist,
d) und mit im Bremssattel angeordneten Nachstelleinrichtungen (6) zum Ausgleich von Bremsbelag- und/oder Bremsscheibenverschleiß, wobei jedem Bremsbelag (2, 3) wenigstens eine Nachstelleinrichtung (6) zugeordnet ist,
**dadurch gekennzeichnet, dass**
e) im Bereich des Schwenkhebels (10) ein Stützteil (11) vorgesehen ist, das derart angeordnet und ausgelegt ist, dass es bei einer Zuspannbewegung des Schwenkhebels (10) nach einem vorbestimmten Hub des Bremskolbens (9) zwischen dem Andruckbereich (13) des Bremsbelages (2) am Schwenkhebel (10) und dessen Abstützung (12) am Bremssattel ein Widerlager für den Schwenkhebel bildet.

2. Scheibenbremse nach Anspruch 1, **dadurch gekennzeichnet, dass** das Stützteil (11) als ein fest mit dem Schwenkhebel (10) verbundener Anschlagstößel ausgebildet ist, der sich im Funktionsfall am Achsteil (7) oder an einem fest mit des Achse verbundenen Teil abstützt.

3. Scheibenbremse nach einem der vorhergehenden Ansprüche, **dadurch gekennzeichnet, dass** das Stützteil (11) als ein fest mit dem Achsteil (7) verbundener Anschlagstößel ausgebildet ist, an dem sich der Schwenkhebel (10) in Funktionsstellung abstützt.

4. Scheibenbremse nach einem der vorhergehenden Ansprüche, **dadurch gekennzeichnet, dass** das Stützteil (11) sich in Zuspannrichtung erstreckt.

5. Scheibenbremse nach einem der vorhergehenden Ansprüche 3 oder 4, **dadurch gekennzeichnet, dass** der Anschlagstößel an einem Achsflansch (8) anliegt bzw. befestigt ist.

6. Scheibenbremse nach einem der vorhergehenden Ansprüche, **dadurch gekennzeichnet, dass** der Achsflansch (8) quer zur Zuspannrichtung verläuft.

7. Scheibenbremse nach einem der vorhergehenden Ansprüche, **dadurch gekennzeichnet, dass** das Stützteil sich quer zur Zuspannrichtung erstreckt.

8. Scheibenbremse nach einem der vorhergehenden Ansprüche, **dadurch gekennzeichnet, dass** die Länge des Stützteiles und dessen Positionierung am Schwenkhebel (10) so ausgebildet ist, dass es etwa zur Hälfte des Zuspannhubes am Achsteil (7) oder am Schwenkhebel (10) anliegt.

## Claims

1. Pneumatically and/or electromechanically actuated disk brake for a utility vehicle having
a) a brake application device (5) for applying the brake,
b) a brake caliper (4) which extends over an axially fixed brake disk (1), which can be fastened to an axle part (7) and which is designed as a fixed caliper which moves the reaction-side brake lining against the brake disk by elastic deformation during brake application movements,
c) the brake application device (5) having a pivoting lever (10) which is supported on the brake caliper (4) on one side and acts on a brake piston (9) on the other, and via which the application-side brake lining (2) can be pressed against the brake disk (1),
d) and having adjusting devices (6) positioned in the brake caliper to compensate for brake lining and/or brake disk wear, at least one adjusting device (6) being assigned to each brake lining (2, 3),
**characterised in that**
e) provided in the area of the pivoting lever (10) is a supporting part (11) which is positioned and designed in such a manner that, during a brake application movement of the pivoting lever (10), after a predefined stroke of the brake piston (9) it forms an abutment for the pivoting lever between the pressure area (13) of the brake lining (2) on the pivoting lever (10) and its support (12) on the brake caliper.

2. Disk brake in accordance with claim 1,
**characterised in that**
the supporting part (11) is designed as a stop pin connected in a fixed manner to the pivoting lever (10) which is supported in operation on the axle part (7) or on a part which is connected in a fixed manner to the axle.

3. Disk brake in accordance with one of the preceding claims,
**characterised in that**
the supporting part (11) is designed as a stop pin connected in a fixed manner to the axle part (7) on which the pivoting lever (10) is supported in the operating position.

4. Disk brake in accordance with one of the preceding claims,
**characterised in that**
the supporting part (11) extends in the brake application direction.

5. Disk brake in accordance with one of claims 3 or 4,
**characterised in that**
the stop pin bears against or is fastened to an axle flange (8).

6. Disk brake in accordance with one of the preceding claims,
**characterised in that**
the axle flange (8) extends at right angles to the brake application direction.

7. Disk brake in accordance with one of the preceding claims,
**characterised in that**
the supporting part extends at right angles to the brake application direction.

8. Disk brake in accordance with one of the preceding claims,
**characterised in that**
the length of the supporting part and its positioning on the pivoting lever (10) are arranged in such a manner that it bears against the axle part (7) or against the pivoting lever (10) over approximately half the brake application stroke.

## Revendications

1. Frein à disque pouvant être actionné pneumatiquement et/ou électromécaniquement pour un véhicule utilitaire, comprenant
a ) un dispositif ( 5 ) de serrage du frein,
b ) un étrier ( 4 ) de frein, qui enjambe un disque ( 1 ) de frein fixe axialement, qui peut être fixé à une partie ( 7 ) d'essieu et qui est conçu sous la forme d'un étrier fixe qui, lors de déplacements de serrage, déplace par déformation élastique la garniture de frein du côté réaction sur le disque de frein,
c ) dans lequel le dispositif ( 5 ) de serrage a un levier ( 10 ) pivotant qui s'appuie, d'un côté, sur l'étrier ( 4 ) de frein et qui, de l'autre côté, attaque un piston ( 9 ) de frein, par lequel la garniture ( 2 ) de frein du côté serrage peut être repoussée sur le disque ( 1 ) de frein,
d ) et comprenant un dispositif ( 6 ) de rattrapage de jeu monté dans l'étrier de frein, pour compenser l'usure de la garniture de frein et/ou du disque de frein, au moins un dispositif ( 6 ) de rattrapage de jeu étant associé à chaque garniture ( 2, 3 ) de frein,
**caractérisé en ce que**
e ) il est prévu, dans la partie du levier ( 10 ) pivotant, une pièce ( 11 ) d'appui, qui est disposée et qui est conçue de manière à ce que, lors d'un mouvement de serrage du levier ( 10 ) pivotant, après une course déterminée à l'avance du piston ( 9 ) de frein entre la partie ( 13 ) d'application d'une pression de la garniture ( 2 ) de frein sur le levier ( 10 ) de pivotement et son appui ( 12 ) sur l'étrier de frein, elle forme une butée pour le levier pivotant.

2. Frein à disque suivant la revendication 1, **caractérisé en ce que** la pièce ( 11 ) d'appui est constituée sous la forme d'un poussoir de butée, relié rigidement au levier ( 10 ) de pivotement et s'appuyant en cas de fonctionnement sur la partie ( 7 ) d'essieu ou sur une partie reliée rigidement à l'essieu.

3. Frein à disque suivant l'une des revendications précédentes, **caractérisé en ce que** la pièce ( 11 ) d'appui est constituée sous la forme d'un poussoir de butée, qui est relié rigidement à la partie ( 7 ) d'essieu et sur lequel s'appuie le levier ( 10 ) de pivotement en position de fonctionnement.

4. Frein à disque suivant l'une des revendications précédentes, **caractérisé en ce que** la pièce ( 11 ) d'appui s'étend dans le sens de serrage.

5. Frein à disque suivant l'une des revendications 3 ou 4 précédentes, **caractérisé en ce que** le poussoir de butée s'applique ou est fixé à un flasque ( 8 ) d'essieu.

6. Frein à disque suivant l'une des revendications précédentes, **caractérisé en ce que** le flasque ( 8 ) d'essieu s'étend transversalement à la direction de serrage.

7. Frein à disque suivant l'une des revendications précédentes, **caractérisé en ce que** la pièce d'appui s'étend transversalement à la direction de serrage.

8. Frein à disque suivant l'une des revendications précédentes, **caractérisé en ce que** la longueur de la pièce d'appui et son positionnement sur le levier ( 10 ) de pivotement sont tels qu'elle s'applique à peu près pour la moitié de la course de serrage sur la partie ( 7 ) d'essieu ou sur le levier ( 10 ) de pivotement.
